# EUROPEAN PATENT APPLICATION

(11) **EP 4 539 275 A1**
(43) Date of publication of application: **16.04.2025**
(21) Application number: 24206087.9
(22) Date of filing: 11.10.2024
(51) Int. Cl.: H02B 1/20, G06F 1/18, H01R 13/70, H02G 5/08

(54) **DISTRIBUTION BOARD SYSTEM AND BUSWAY CONFIGURATION, BRIDGE SWITCH, AND DISTRIBUTION DEVICES THEREOF**

(30) Priority: 13.10.2023 TW 112139187
(71) Applicant: Taiwan Busway Co., Ltd., Taoyuan City 338 (TW)
(72) Inventor: CHEN, Min-Li, Taoyuan City 338 (TW)
(74) Representative: Botti & Ferrari S.p.A.

(57) **Abstract**

A distribution board system includes a chassis, a busway configuration, a first bridge switch and a first distribution device. The busway configuration is arranged outside the chassis and includes a first busway coupled to a first power supply and a second busway. The first bridge switch is arranged inside the chassis and configured to bridge the first busway and the second busway. The first distribution device is arranged inside the chassis and configured to be arranged at the second busway.

## Description

### TECHNICAL FIELD

The present invention relates to a distribution board system and a busway configuration, a bridge switch, and a distribution device thereof; in particular to, the present invention relates to a distribution board system having a busway configuration arranged outside a chassis of the distribution board system.

### BACKGROUND

Conventional distribution board systems are configured by copper strips or copper bars to connect both the power source and the distribution board inside the chassis. However, there are many restrictions on the configuration of the copper strips or the copper bars. For example, the copper strips and the copper bars are insulated from each other by air. In a high-voltage distribution application, the conventional distribution board systems require a large space for air insulation. Due to the space requirement, the conventional distribution board systems need a larger chassis as well, and the larger chassis increases the production cost. Moreover, the larger space requirement also increases the power transmission path, resulting in increased cost of copper used in the power transmission path. The increased power transmission path will cause more power loss and generate more heat during power transmission. The placement space and the environmental temperature for arranging the distribution board systems are significantly restricted as mentioned above.

On the other hand, for connecting the copper strips or the copper bars, the copper strips or the copper bars are processed to be bent or stretched in advance. Therefore, most of the power transmission paths of the distribution board system are customized. In other words, the adjustability and/or the expandability of the copper strips or the copper bars are poor due to the difficult installation means for the copper strips or the copper bars. For example, for the purpose of extending the path or adjusting the configuration, the copper strips or the copper bars must be replaced to achieve the purpose of adjustment or expansion. In addition, when extending or adjusting the configuration of the copper strips or the copper bars for expansion or routine maintenance, the power transmission path must be powered off to ensure the safety of operators by not being exposed in high voltage environments. However, for a high-performance factory, powered off will cause the loss of production.

Accordingly, how to reduce the required space or the material cost of the distribution board system and improve its adjustability, as well as the convenience or safety of construction or maintenance, will be major subjects in this field.

### SUMMARY

One of the objectives of the present invention is to provide a distribution board system with reduced volume and manufacturing costs.

One of the objectives of the present invention is to provide a distribution board system with improved expandability and safety.

The present invention provides a distribution board system. The distribution board system includes a chassis, a busway configuration, a first bridge switch and a first distribution device. The busway configuration is arranged outside the chassis and includes a first busway and a second busway. The first busway is coupled to a first power supply. The first bridge switch is arranged inside the chassis and configured to bridge the first busway and the second busway. The first distribution device is arranged inside the chassis and configured to be arranged at the second busway.

The present invention provides a busway configuration for the distribution board system. The busway configuration includes a first busway and a second busway. The first busway is arranged outside a chassis of the distribution board system and coupled to a first power supply. The first busway has a first arrangement part. The second busway is arranged outside the chassis and has a second arrangement part and a third arrangement part. The first arrangement part and the second arrangement part are configured for setting up a bridge switch, so that the first busway is coupled to the second busway through the bridge switch. The third arrangement part is configured for setting up a distribution device.

The present invention provides a bridge switch for the busway configuration. The bridge switch includes a first plug terminal, a second plug terminal and a switch part. The first plug terminal is configured to be arranged at the first arrangement part. The second plug terminal is configured to be arranged at the second arrangement part. The switch part is coupled with the first plug terminal and the second plug terminal and configured to control a conduction of the first plug terminal and the second plug terminal.

The present invention provides a distribution device. The distribution device includes a main control switch and a first distribution strip configured for setting up a plug-in unit. The primary side of the main control switch has a third plug terminal configured to be arranged at the second busway. The first distribution strip is coupled to the secondary side of the main control switch.

Accordingly, the distribution board system of the present invention replaces the bare copper bars or strips by the first busway and the second busway arranged outside the chassis. Compared to the bare copper bars or strips, busways provide better insulation properties and a better construction safety and can be installed or removed without cutting off the power supply. The better construction safety of the power transmission path means that the required installation space for the power transmission path can be significantly reduced, thereby reducing material and space costs. Regarding the heat dissipation, because the first busway and the second busway are located outside the chassis of the distribution board system, heat generated during power transmission will be effectively dissipated through the first busway and the second busway without being accumulated in the chassis. Therefore, the heat dissipation will be improved, and the risk/difficulty for heat control will be reduced. On the other hand, the configuration of the first busway and the second busway also provides good expandability. The power transmission path can be adjusted or extended by connecting two or more busways through bridge switches. The bridge switches also serve as a circuit breaker of the power transmission path. The bridge switches provide nodes or breakpoints to improve safety.

### BRIEF DESCRIPTION OF THE DRAWINGS

The accompanying drawings are presented to help describe various aspects of the present invention. In order to simplify the accompanying drawings and highlight the contents to be presented in the accompanying drawings, conventional structures or elements in the accompanying drawings may be drawn in a simple schematic way or may be omitted. For example, a number of elements may be singular or plural. These accompanying drawings are provided merely to explain these aspects and not to limit them.
FIGs. 1A to 1C are schematic diagrams of the appearance of a distribution board system in an embodiment of the present invention.
FIG. 2 is a schematic diagram of conductor transmission in the busway configuration of a distribution board system according to an embodiment of the present invention.
FIG. 3A and FIG. 3B are schematic diagrams of the connection of the distribution structure in the distribution board system according to an embodiment of the present invention.
FIG. 4 is a schematic diagram of the main control switch of the distribution structure in the distribution board system according to an embodiment of the present invention.
FIG. 5 is a schematic diagram of conductor transmission in the busway configuration of a distribution board system according to another embodiment of the present invention.
FIGs. 6A to 6B are schematic diagrams of the appearance of a distribution board system in another embodiment of the present invention.
FIG. 7 is a schematic diagram of conductor transmission in the busway configuration of a distribution board system according to a further embodiment of the present invention.
FIG. 8 is a schematic diagram of setting multiple distribution devices in a distribution board system according to an embodiment of the present invention.

### DETAILED DESCRIPTION

Any reference to elements using terms such as "first" and "second" herein generally does not limit the number or order of these elements. Conversely, these names are used herein as a convenient way to distinguish two or more elements or element instances. Therefore, it should be understood that the terms "first" and "second" in the request item do not necessarily correspond to the same names in the written description. Furthermore, it should be understood that references to the first element and the second element do not indicate that only two elements can be used or that the first element needs to precede the second element. Open terms such as "include", "comprise", "have", "contain", and the like used herein means including but not limit to.

The term "coupled" is used herein to refer to direct or indirect electrical coupling between two structures. For example, in an example of indirect electrical coupling, one structure may be coupled with another structure through a passive element such as a resistor, a capacitor, or an inductor.

In the present invention, the term such as "exemplary" or "for example" is used to represent "giving an example, instance, or description". Any implementation or aspect described herein as "exemplary" or "for example" is not necessarily to be construed as preferred or advantageous over other aspects of the present invention. The terms "about" and "approximately" as used herein with respect to a specified value or characteristic are intended to represent within a value (for example, 10%) of the specified value or characteristic.

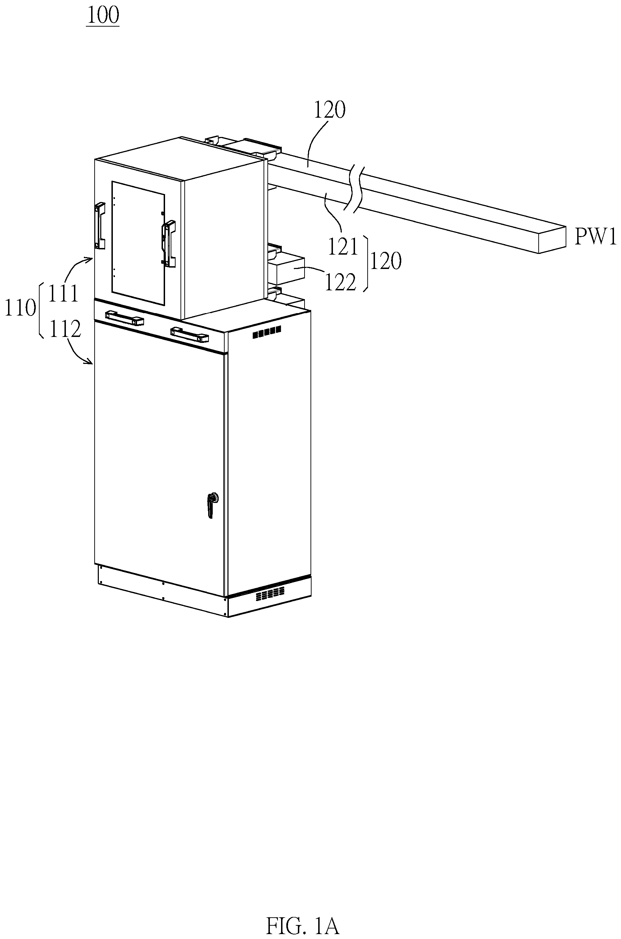

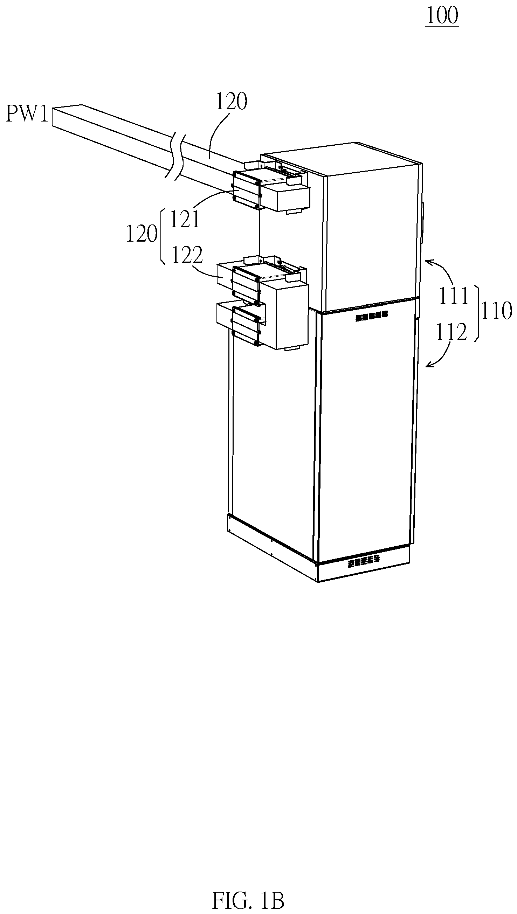

Referring to FIGs. 1A-1C, FIGs. 1A-1C illustrate the distribution board system 100 of the present invention. The distribution board system 100 includes a chassis 110, a busway configuration 120 arranged outside the chassis 110, a first bridge switch 131 arranged inside the chassis 110, and a first distribution device 141. The busway configuration 120 includes a first busway 121 and a second busway 122. The first busway 121 is coupled to the first power supply (PW1). The first distribution device 141 is configured to be arranged at the second busway 122. The first bridge switch 131 is configured to bridge the first busway 121 and the second busway 122.

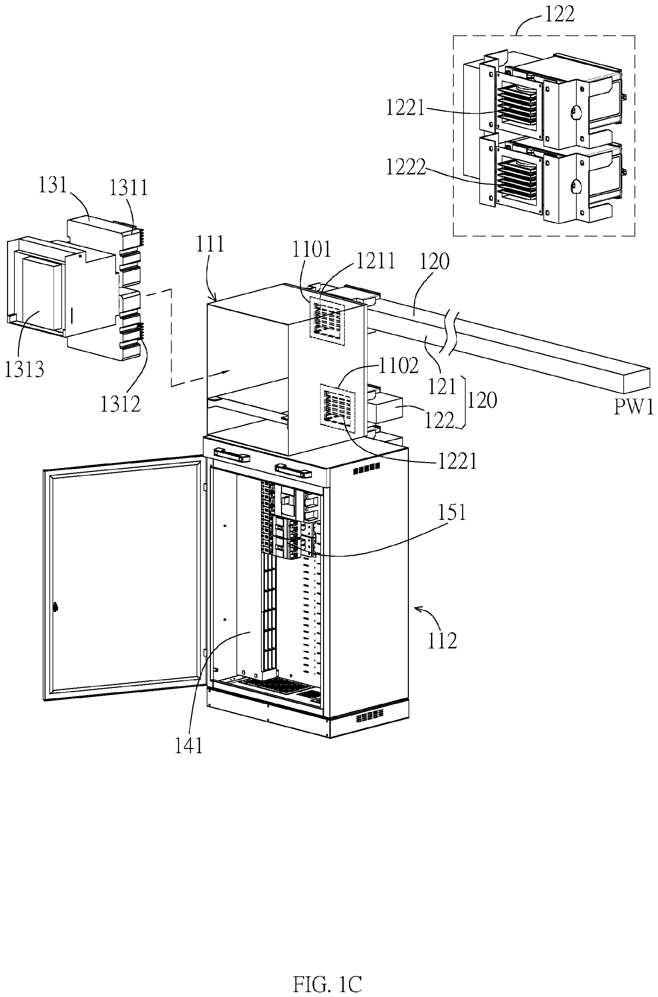

Specifically, the chassis 110 can be made of any conventional material, such as but not limited to iron, wooden, or plastic. The chassis 110 has a storage space therein and a chassis door for opening or closing the storage space. In the embodiment, the chassis 110 includes a switch chassis 111 and a distribution chassis 112. The first bridge switch 131 is located in the switch chassis 111, and the first distribution device 141 is located in the distribution chassis 112. However, the configuration shown in FIG. 1C is only an example and is not intended to limit the present invention. The chassis 110 of the present invention can be composed as a single storage space or multiple storage spaces. The size of the chassis 110 is determined, for example, based on the first distribution device 141 and the first bridge switch 131 located inside the chassis 110. Because the busway configuration 120 for external power transmission is set outside the chassis 110, the required volume or size of the chassis 110 can be significantly reduced. The chassis 110 with reduced size effectively reduces the manufacturing cost and the implicit costs for handling, assembling, maintenance, etc.

As shown in FIG. 1C, the busway configuration 120 includes the first busway 121 located outside the chassis 110 of the distribution board system 100 and coupled to the first power supply (PW1) and the second busway 122 located outside the chassis 110. The first busway 121 has a first arrangement part 1211. The wall of the chassis 110 has a first setting hole 1101 corresponding to the first arrangement part 1211. The second busway 122 has a second arrangement part 1221 and a third arrangement part 1222. The wall of the chassis 110 further has a second setting hole 1102 corresponding to the second arrangement part 1221 and a third setting hole corresponding to the third arrangement part 1222 (for simplified illustration, please refer to the upper-right box with dash line of FIG. 1C). The first arrangement part 1211 and the second arrangement part 1221 are disposed corresponding to each other and configured to set up a bridge switch. The third arrangement part 1222 is configured to set up a distribution device. It should be noted that the first arrangement part 1211 and the second arrangement part 1221 shown in FIG. 1C are only examples and are not intended to limit the installation configuration of the first busway 121 or the second busway 122. For example, the first arrangement part 1211 and the second arrangement part 1221 can be configured for any conventional busway/bus bar connection or installation, such as insertion, screw locking, or compression.

Specifically, the first busway 121 and/or the second busway 122 are preferably a cast resin busway or an armored busway, which has insulated casings. Moreover, it is preferable to have insulation resin filled between the conductor pieces inside the first busway 121 and/or the second busway 122 to increase waterproof, dustproof, or explosion-proof properties. In addition, the interior of the first busway 121 and/or the second busway 122 may be filled with thermal conductive materials (such as thermal conductive adhesive or thermal conductive sheets) or thermal conductive filling materials (such as inorganic silicon powder or sand powder). The exterior of the first busway 121 and/or the second busway 122 may have heat dissipation structures (such as heat dissipation fins). Accordingly, the internal and/or the external heat dissipation configurations of the first busway 121 and/or the second busway 122 will improve the heat dissipation effect of the first busway 121 and/or the second busway 122, and dangers caused by excessive waste heat generated by transmitting high-power energy can be avoided.

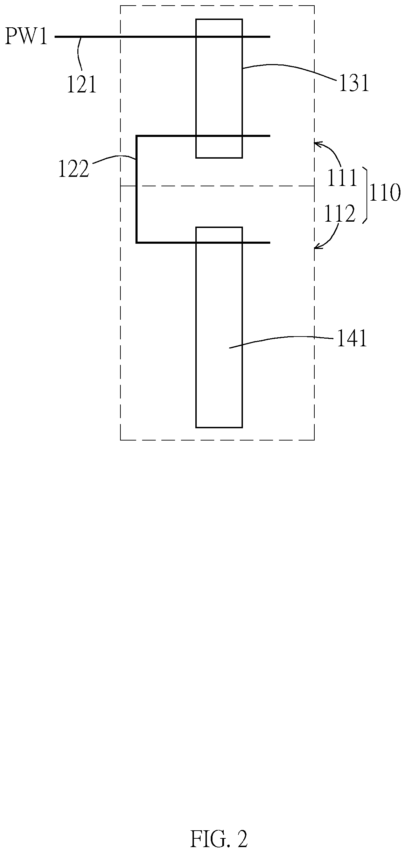

In an embodiment, an exemplary layout of the busway configuration 120 is shown in FIG. 2. Referring to FIG. 2, the busway configuration 120 composed by the first busway 121 and the second busway 122 is arranged outside the chassis 110 of the distribution board system 100. The busway configuration 120 is preferably disposed on the back side of the chassis 110 (i.e. the side opposite to the chassis door of the chassis 110), but not limited thereto. The first power supply (PW1), for example, is a transformer station or a power supply terminal in the factory area where the distribution board system 100 is located. The first busway 121 receives power from the first power supply (PW1) and transmits the power to the second busway 122 through the first bridge switch 131. It should be noted that the first bridge switch 131 is arranged inside the chassis 110 and inserted into the first busway 121 and the second busway 122 through the first setting hole 1101 and the second setting hole 1102. Therefore, the first bridge switch 131 can be detachably set on the first busway 121 and the second busway 122 within the chassis 110. In addition, the first arrangement part 1211 of the first busway 121 is arranged corresponding to the second arrangement part 1221 of the second busway 122 to reserve a gap between the first arrangement part 1211 of the first busway 121 and the second arrangement part 1221 of the second busway 122. The size of the gap is preferably determined based on the size of the first bridge switch 131 to allow the insertion of the first bridge switch 131. In an embodiment, the first arrangement part 1211 of the first busway 121 and the second arrangement part 1221 of the second busway 122 are preferably located on the back side of the switch chassis 111 of the chassis 110. Therefore, the first bridge switch 131 arranged inside the switch chassis 111 will have an independent configuration space. When replacing or controlling the first bridge switch 131, the independent configuration space (e.g. the switch chassis 111) can be independently opened for operations to reduce the risk of accidental electric shock or other hazards caused by the other parts of the distribution board system 100, but not limited thereto.

On the other hand, the first bridge switch 131 includes a first plug terminal 1311 configured to be arranged at the first busway 121, a second plug terminal 1312 configured to be set on the second busway 122, and a switch part 1313 coupled to the first plug terminal 1311 and the second plug terminal 1312. The switch part 1313 is configured to control the conduction of the first plug terminal 1311 and the second plug terminal 1312. Specifically, the interface configurations of the first plug terminal 1311 and the second plug terminal 1312 of the first bridge switch 131 are determined based on the corresponding first arrangement part 1211 and the second arrangement part 1221, respectively. The switch part 1313 of the first bridge switch 131 is configured to switch between an open circuit and a closed circuit. When switch part 1313 is switched to the closed circuit, the first plug terminal 1311 and the second plug terminal 1312 are electrically connected. When the switch part 1313 is switched to the open circuit, the first plug terminal 1311 and the second plug terminal 1312 are not conducted. In general, the first bridge switch 131 may be a circuit breaker. For example, the type of first bridge switch 131 is selected from a molded-case circuit breaker (MCCB), an air circuit breaker (ACB), or other commonly known circuit breakers or switches. The first bridge switch 131 provides primary protection to the first busway 121 and the second busway 122 by creating a break node. When multiple bridge switches are parallelly connected between the first busway 121 or the second busway 122, the multiple bridge switches can be independently switched to connection or disconnection. In another embodiment, the first busway 121 can be configured to be directly coupled to the second busway 122 without the first bridge switch 131. It should be noted that the busway configuration 120 shown in FIG. 2 which is disposed along the horizontal direction is only an example and not intended to limit the arrangement of the busway configuration 120. In the present invention, the first busway 121 and the second busway 122 can be arranged horizontally, vertically, or diagonally. The layout of the first busway 121 and the second busway 122 can be modified based on the setting area/space, position of the power supply source, or other conventional configuration considerations.

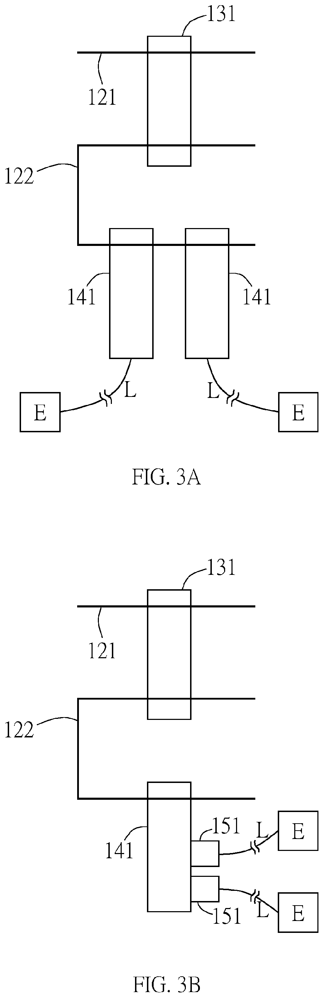

The second busway 122 preferably extends to the distribution chassis 112 and has a third arrangement part for setting a first distribution device 141. Specifically, the first distribution device 141 is set in the distribution chassis 112. Referring to FIGs. 3A and 3B, the first distribution device 141 includes a third plug terminal and a distribution structure configured to be arranged at the second busway 122. The first distribution device 141 is configured to be arranged at the third arrangement part of the second busway 122 through the third plug terminal. The connection means for connecting the third plug terminal and the third arrangement part may be any connection means for conventional busways. The distribution structure is coupled to the third plug terminal. When the first distribution device 141 is set on the second busway 122, and the first bridging device 131 is conducted, the power provided by the first power supply (PW1) can be transmitted to the distribution structure. For example, the distribution structure can be a configuration of connection lines L shown in FIG. 3A or a configuration of distribution strips as shown in FIG. 3B. In the implementation of the configuration of connection lines, the device E that requires power can be coupled through a power transmission line. It should be noted that the power transmission line can be fixedly or detachably (such as through connection methods such as plugs and sockets) coupled to the third plug terminal. The power transmission line may be connected to a single device or multiple devices according to parameters such as power demand of the device(s) and the power output of the power transmission line. In the implementation of the configuration distribution strips, the distribution strips are configured for setting up at least one branching device 151 and transmitting power to device E through the at least one branching device 151. It should be noted that the present invention is not limited to the number of distribution devices. In other words, the first distribution device 141 may be configured to provide multiple insertion positions for setting up multiple distribution devices. In the embodiment, it is not limited to the types of the distribution devices. The distribution structures shown in FIGs. 3A and 3B can be implemented separately or in combination.

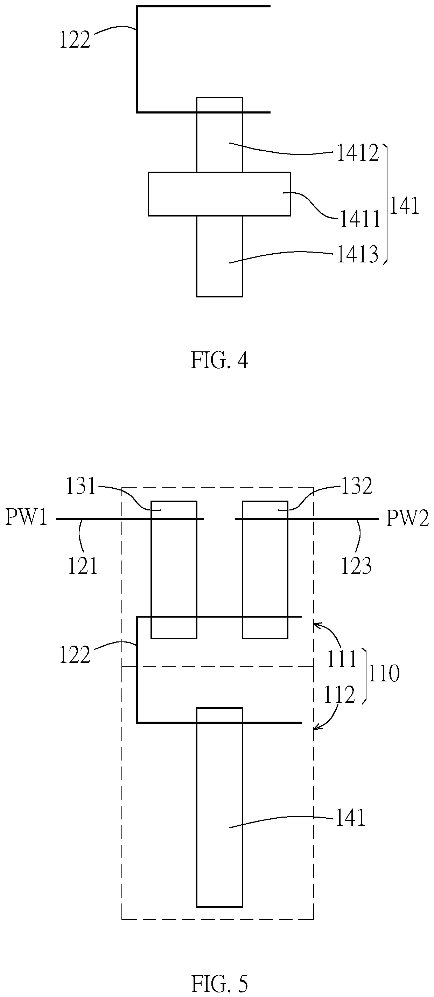

In an embodiment, referring to FIG. 4, the first distribution device 141 may further include a main control switch 1411. For example, the primary side of the main control switch 1411 is coupled to the third plug terminal 1412, and the secondary side of the main control switch 1411 is coupled to the distribution structure 1413. Specifically, the primary side of the main control switch 1411 is the power input side, which is coupled to the second busway 122 through the third plug terminal 1412 and receives power from the first power supply (PW1). After the main control switch 1411 is used for circuit breaker protection, the distribution structure 1413 coupled to the secondary side (i.e., the side coupled to the load) of the main control switch 1411 is used for power distribution. The main control switch 1411 provides an additional protection for the first distribution device 141. In an application with multiple distribution devices, each of the main control switches may be switched independently and operated separately. However, the distribution device of the present invention is not limited to the main control switch, and the control of the power transmission can be switched merely by the first bridge switch.

In the distribution board system 100, the first busway 121 and the second busway 122 arranged outside the chassis 110 replace the conventional copper bars or copper strips connected to the power supply. Compared to the conventional copper bars or strips, the first busway 121 and the second busway 122 provide better insulation properties due to the armored or molded feature of the busways 121, 122 and the elimination of The first busway 121 and the second busway 122 do not require large space for air insulation. Therefore, the first busway 121 and the second busway 122 reduce the arrangement space or the occupied volume and provide a safe operating environment with better insulation. Furthermore, the first busway 121 and the second busway 122 allow installation or removal without cutting off/interrupting the power supply. In addition, the material for the conductor in the busway is less than the conventional copper bars or strips. Hence, the material cost and the power loss of the power transmission path are reduced. On the other hand, busways have good expandability and can be connected or expanded through bridge switches or other busways. With the bridge switch served as a circuit breaker, the busways are configured to set break nodes for the power transmission to improve safety. The busway configuration arranged outside the chassis also provides good heat dissipation effect, avoiding the accumulation of heat energy inside the chassis and reducing the operation risk. Accordingly, the busway configuration of the distribution board system 100 reduces the operating cost for monitoring the temperature of the power transmission path or the power distribution device.

Referring to FIG. 5, in an embodiment, the distribution board system 100 may further include a third busway 123 and a second bridge switch 132. The third busway 123 is located outside the chassis 110. The second bridge switch 132 is located inside the chassis 110. The third busway 123 is coupled to a second power supply (PW2). The second bridge switch 132 is configured to bridge the third busway 123 and the second busway 122.

Specifically, the third busway 123 coupled to the second power supply (PW2) is powered in parallel with the first busway 121 coupled to the first power supply (PW1) as a dual circuit for the distribution board system 100. For example, when the first bridge switch 131 makes the first busway 121 and the second busway 122 be conducted, and the second bridge switch 132 is switched off, the first distribution device 141 will receive power from the first power supply (PW1). When switching the power supply of the first distribution device 141, the second bridge switch 132 is turned on as a conduction path to connect the second busway 122 and the third busway 123, and the first bridge switch 131 is turned off as a break circuit. In this switching configuration, the first distribution device 141 will receive power from the second power supply (PW2). In the embodiment, if one of the first power supply (PW1) and the second power supply (PW2) experiences an abnormality or needs to be interrupted, the other one will respond quickly to provide the power supply to the first distribution device 141 to avoid losses caused by prolonged waiting and interruption of the operation of the factory machinery.

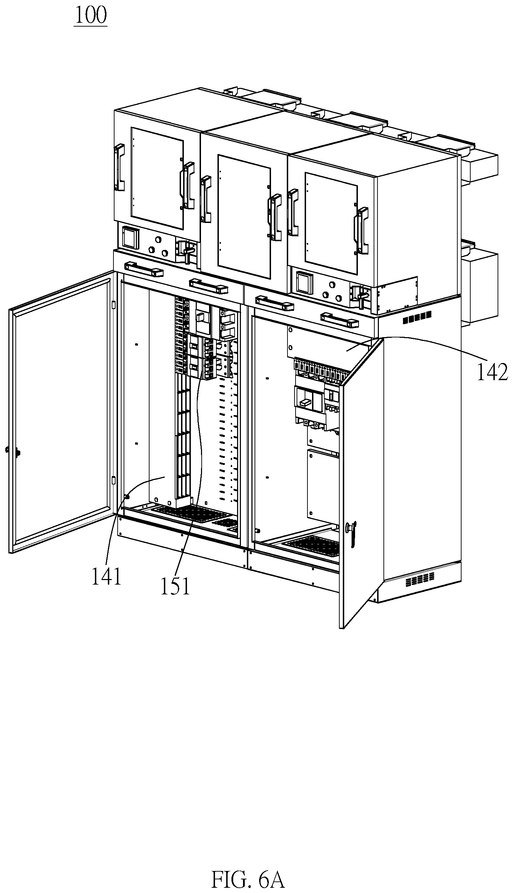

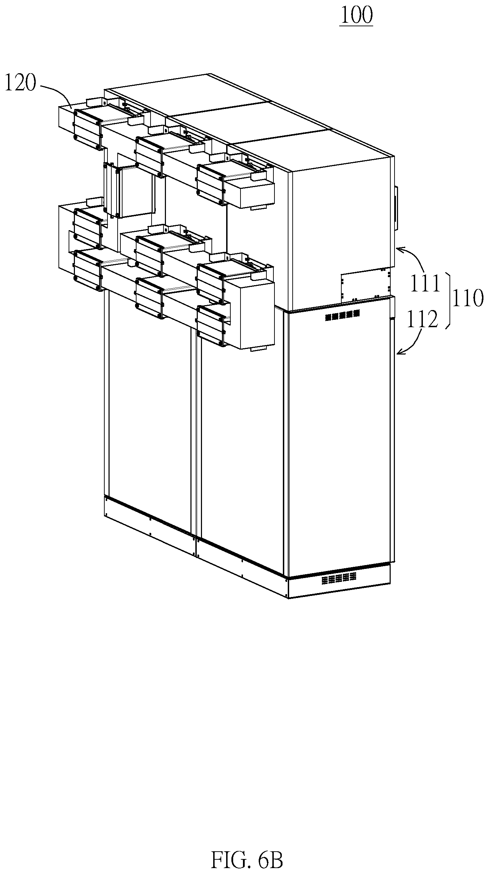

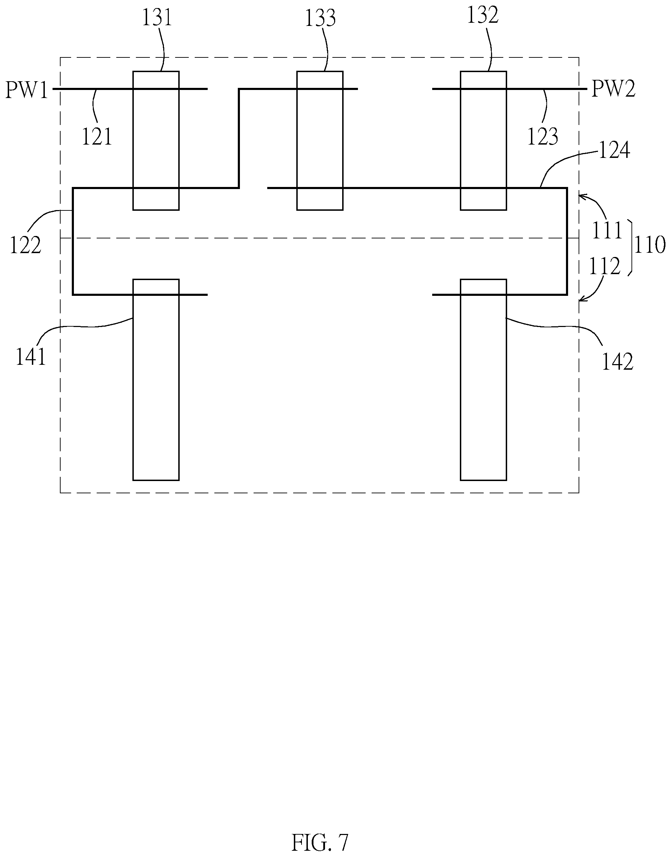

Referring to FIGs. 6A, 6B, and 7, in another embodiment, the distribution board system 100 may further include a third busway 123, a fourth busway 124, a second bridge switch 132, and a third bridge switch 133. The third busway 123 is located outside the chassis 110. The fourth busway 124 is located outside the chassis 110. The second bridge switch 132 is located inside the chassis 110. The third bridge switch 133 is located inside chassis 110. The third busway 123 is coupled to the second power supply (PW2). The second bridge switch 132 is configured to bridge the third busway 123 and the fourth busway 124. The third bridge switch 133 is configured to bridge the second busway 122 and the third busway 123 or the fourth busway 124. The second busway 122 and the fourth busway 124 of the busway configuration 120 shown in FIGs. 6A and 6B have partially connected shells, which increase the structural strength and overall integrity of the busway configuration 120, but not limited thereto.

Regarding the internal layout of the busway configuration 120, the internal layout of the busway configuration 120 is shown in FIG. 7. Referring FIG. 7, the third busway 123 is coupled to the second power supply (PW2) and is powered in parallel with the first busway 121 coupled to the first power supply (PW1) as a dual circuit. The third busway 123 can be coupled to other distribution devices (e.g. the second distribution device 142) through the fourth busway 124. The first power supply (PW1) provides power to the first distribution device 141 through the first busway 121 and the second busway 122 conducted by the first bridge switch 131. In addition, the second power supply (PW2) provides power to the second distribution device 142 through the third busway 123 and the fourth busway 124 conducted by the second bridge switch 132 to form a dual power supply architecture. It should be noted that in the above dual power supply situation, the third bridge switch 133 is in an open-circuit state to avoid short circuit between the first power supply (PW1) and the second power supply (PW2).

In an embodiment, when switching the dual power supply architecture, the second busway 122 can be bridged to the fourth busway 124 through the third bridge switch 133. For example, when the first distribution device 141 needs to receive power from the second power supply (PW2), the third bridge switch 133 is set as a conduction path, so that the second busway 122 and the third busway 123 are electrically connected to each other. The second bridge switch 132 is set as a conduction path, so that the third busway 123 and the fourth busway 124 are electrically connected to each other. The first bridge switch 131 is set as an open-circuit, so that the first busway 121 and the second busway 122 are not electrically connected to each other. On the other hand, when the second distribution device 142 needs to receive power from the first power supply (PW1), the third bridge switch 133 is set as a conduction path, so that the second busway 122 and the fourth busway 124 are electrically connected to each other. The first bridge switch 131 is set as a conduction path, so that the first busway 121 and the second busway 122 are electrically connected to each other. The second bridge switch 132 is set as an open-circuit, so that the third busway 123 and the fourth busway 124 are not electrically connected to each other. Through the above busway configuration 120, the first power supply (PW1) and the second power supply (PW2) can independently supply power and support each other. The busway configuration 120 arranged outside the chassis 110 effectively reduces the required space of the chassis 110 and the length of the power transmission path. When the power transmission path needs to be expanded, the expansion can be made by connecting busways. The expansion will not encounter the problem of difficult adjustment in traditional copper bars or strips.

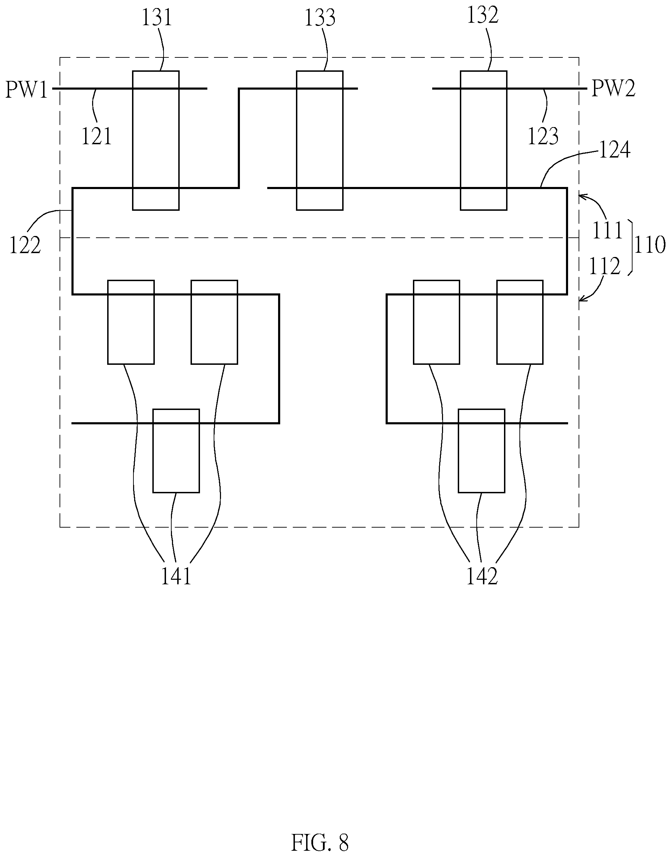

In the embodiment, the number of first distribution devices 141 or the second distribution devices 142 is not limited. Specifically, referring to FIG. 8, the second busway 122 can be bent to extend corresponding to the chassis 110 or the distribution chassis 112. The second busway 122 can be configured to have multiple third arrangement parts for setting up multiple first distribution devices 141. On the other hand, the fourth busway 124 can be configured to have multiple arrangement parts for setting up multiple second distribution devices 142. It should be noted that the number of third arrangement parts in the second busway 122 can be greater than or equal to the number of the first distribution devices 141. Specifically, the third arrangement parts can be preserved and used as preparatory sockets to make the arrangement of the first distribution device 141 more flexible.

Based on the busway configuration (i.e. first busway, second busway, third busway, and fourth busway) arranged outside the chassis and connected/bridged by bridge switches, the application for dual power supply can be achieved. Compared to the conventional copper bars, the busway configuration arranged outside the chassis saves the arrangement space due to better insulation and heat dissipation properties. With the busway configuration, the expansion and/or modification of the power transmission path are easy to accomplish. In addition, compared to the conventional copper bars, it is not necessary to turn off the power during inserting a bridge switch or a distribution device into the busway configuration (i.e. hot swapping or hot plugging) due to higher safety.

The previous description of the present invention is provided to enable a person of ordinary skill in the art to make or implement the present invention. Various modifications to the present invention will be apparent to a person skilled in the art, and the general principles defined herein can be applied to other variations without departing from the spirit or scope of the present invention. Therefore, the present invention is not intended to be limited to the examples described herein, but is to be in accord with the widest scope consistent with the principles and novel features of the invention herein.

## Claims

1. A distribution board system, comprising:
a chassis;
a busway configuration arranged outside the chassis, the busway configuration including a first busway coupled to a first power supply and a second busway;
a first bridge switch arranged inside the chassis and configured to bridge the first busway and the second busway; and
a first distribution device configured to be arranged at the second busway.

2. The distribution board system of claim 1, wherein the first bridge switch is a molded-case circuit breaker (MCCB) or an air circuit breaker (ACB).

3. The distribution board system of claim 1, wherein the first bridge switch includes:
a first plug terminal configured to be arranged at the first busway;
a second plug terminal configured to be arranged at the second busway; and
a switch coupled with the first plug terminal and the second plug terminal and configured to control a conduction of the first plug terminal and the second plug terminal.

4. The distribution board system of claim 1, wherein the first busway has a first arrangement part; the second busway has a second arrangement part and a third arrangement part; the first arrangement part and the second arrangement part are configured for setting up the first bridge switch, so that the first busway is coupled to the second busway through the first bridge switch; the third arrangement part is configured for setting up the first distribution device.

5. The distribution board system of claim 1, wherein the first distribution device includes:
a third plug terminal configured to be arranged on the second busway; and
a distribution structure coupled to the third plug terminal.

6. The distribution board system of claim 1, wherein the chassis includes a switch chassis and a distribution chassis; the first bridge switch is arranged inside the switch chassis, and the first distribution device is arranged inside the distribution chassis.

7. The distribution board system of claim 1, wherein the busway configuration further includes a third busway arranged outside the chassis and coupled to a second power supply; the distribution board system further includes a second bridge switch arranged inside the chassis and configured to bridge the second busway with the third busway; the first distribution device is configured to selectively receive power from one of the first power supply and the second power supply through the first bridge switch or the second bridge switch.

8. The distribution board system of claim 1, wherein the busway configuration further includes:
a third busway arranged outside the chassis and coupled to a second power supply; and
a fourth busway arranged outside the chassis; and
wherein the distribution board system further includes:
a second bridge switch arranged inside the chassis and configured to bridge the third busway and the fourth busway; and
a third bridge switch arranged inside the chassis and configured to selectively bridge the second busway with the third busway or the fourth busway.

9. The distribution board system of claim 8, further comprising:
a second distribution device configured to be arranged at the fourth busway.

10. A busway configuration for a distribution board system, comprising:
a first busway arranged outside a chassis of the distribution board system and coupled to a first power supply, the first busway having a first arrangement part; and
a second busway arranged outside the chassis, the second busway having a second arrangement part and a third arrangement part,
wherein the first arrangement part and the second arrangement part are configured for setting up a bridge switch, so that the first busway is coupled to the second busway through the bridge switch; and
wherein the third arrangement part is configured for setting up a distribution device.

11. A bridge switch for the busway configuration of claim 10, comprising:
a first plug terminal configured to be arranged at the first arrangement part;
a second plug terminal configured to be arranged at the second arrangement part; and
a switch part coupled with the first plug terminal and the second plug terminal and configured to control a conduction of the first plug terminal and the second plug terminal.

12. A distribution device for the busway configuration of claim 10, comprising:
a third plug terminal configured to be arranged at the third arrangement part; and
a distribution structure coupled to the third plug terminal.
